Europäisches Patentamt

European Patent Office

Office européen des brevets

(11) Numéro de publication: **0 181 241**

**A1**

# (12) DEMANDE DE BREVET EUROPEEN

(21) Numéro de dépôt: 85401927.0

(22) Date de dépôt: 03.10.85

(51) Int. Cl.⁴: **B65G 17/36**

(30) Priorité: 08.10.84 FR 8415410

(43) Date de publication de la demande:
14.05.86 Bulletin 86/20

(84) Etats contractants désignés:
BE CH DE FR GB IT LI LU NL

(71) Demandeur: GUERY S.A. Société Anonyme
7, route de Chemillé La Tourlandry
F-49120 Chemille(FR)

(72) Inventeur: Galimard, Jacques
13, rue Jean Baptiste Dubillot
F-49300 Cholet(FR)

(74) Mandataire: Caunet, Jean et al
Cabinet BEAU DE LOMENIE 55, rue d'Amsterdam
F-75008 Paris(FR)

(54) Godet perfectionné pour élévateur à godets.

(57) Le godet comprend une paroi arrière (1) et deux parois latérales (2) reliées par des arrondis entre elles et avec un fond (4) relevé vers l'avant qui se termine par un bord d'attaque (7).

Selon l'invention, le fond (4) est conformé, sur toute son étendue depuis le bord d'attaque (7) jusqu'à l'arrondi (11) de raccordement avec la paroi arrière (1), sensiblement en parabole dont la direction asymptotique (8) forme un angle de 60° à 75° - de préférence 68° - avec cette paroi arrière (1) et dont le sommet (9) est situé à proximité de ce bord d'attaque (7) de sorte que la tangente au sommet (10) de ce fond parabolique forme un angle de 15 à 30° - de préférence 22°-avec ladite paroi arrière.

Fig. 3

## Godet perfectionné pour élévateur à godets

La présente invention concerne un godet pour élévateur à godets.

Jusqu'à présent, la forme particulière d'un godet est déterminée notamment par la définition du produit à véhiculer et la vitesse de l'élévateur. Des résultats satisfaisants de débit sont alors obtenus, à condition cependant que le type de produit véhiculé soit toujours le même.

Or, de plus en plus, les besoins en produits véhiculés changent et l'élévateur équipé des godets sélectionnés pour le produit prévu initialement ne donne plus satisfaction.

La présente invention a pour but de remédier à cet inconvénient majeur et vise par conséquent à proposer un godet universel valable pour une gamme étendue de produits. Ce godet doit disposer de conditions d'écoulement optimisées pour se remplir et se vider facilement, rapidement et complètement, ainsi que d'une capacité accrue pour un encombrement déterminé.

Dans ce but, la présente invention perfectionne les godets connus qui comportent une paroi arrière et deux parois latérales reliées par des arrondis entre elles et avec un fond relevé vers l'avant qui se termine par un bord d'attaque.

Conformément à l'invention, le perfectionnement réside notamment en ce que le fond est conformé, sur toute son étendue depuis le bord d'attaque jusqu'à l'arrondi de raccordement avec la paroi arrière, sensiblement en parabole dont la direction asymptotique forme un angle de 60° à 75 avec cette paroi arrière et dont le sommet est situé à proximité de ce bord d'attaque de sorte que la tangente au sommet de ce fond parabolique forme un angle de 15° à 30° avec ladite paroi arrière.

La direction asymptotique précitée forme avec la paroi arrière un angle de préférence sensiblement égal à 22° de sorte que la tangente au sommet précitée forme avec ladite paroi arrière un angle de préférence sensiblement egal à 22°.

De plus, le bord d'attaque est arrondi sensiblement en quart de cercle.

Suivant une autre caractéristique importante de l'invention, le bord supérieur de chaque paroi latérale est une ligne brisée présentant une partie antérieure s'élevant du bord d'attaque vers la paroi arrière suivant une pente sensiblement égale à la pente naturelle d'un tas du produit véhiculé et une partie postérieure descendant vers ladite paroi arrière.

La pente de la partie antérieure du bord de chaque paroi latérale est comprise entre 15 et 30° et de préférence égale à environ 22°.

En outre, le bord supérieur brisé de chaque paroi latérale est arrondi sensiblement en quart de cercle.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin :

- la figure 1 est une perspective illustrant le godet conforme à l'invention,

- la figure 2 est une élévation de devant prise suivant la flèche F de la figure 1.

- la figure 3 est une coupe antéro-postérieure prise suivant la ligne III-III de la figure 2,

- la figure 4 est une vue en plan prise de dessus relativement à la figure 2.

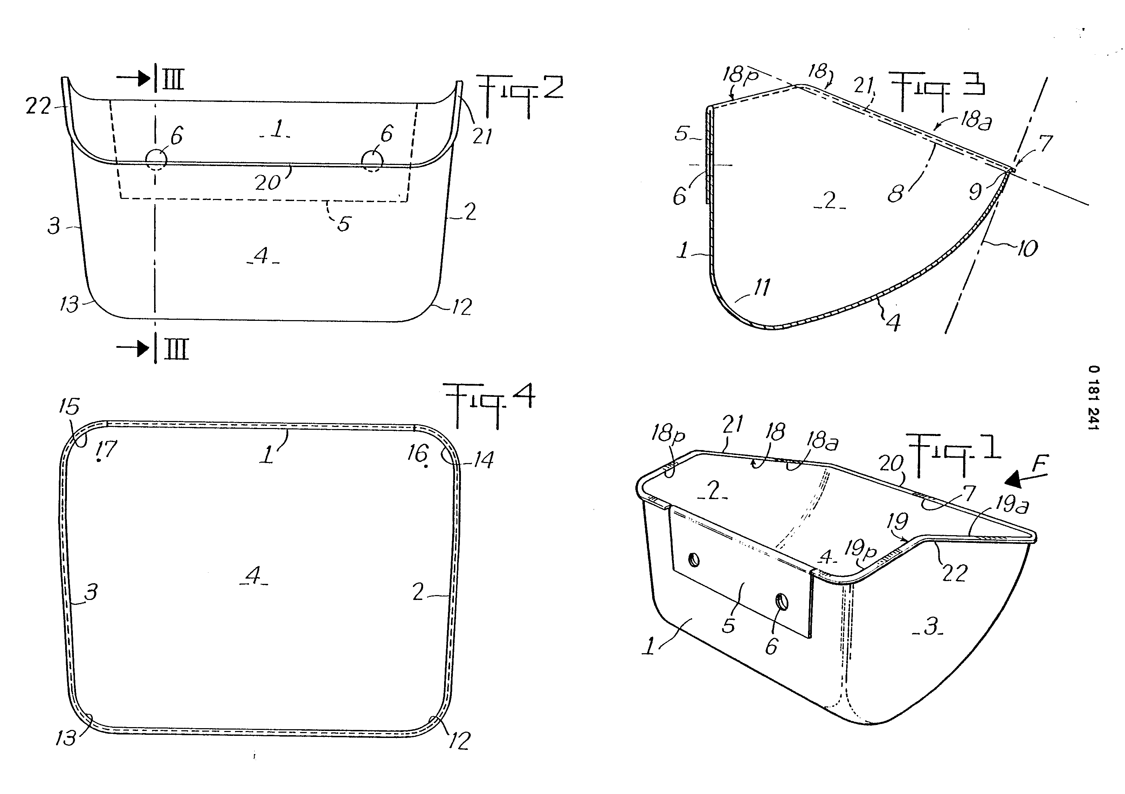

Dans l'exemple représenté, le godet est en tôle métallique emboutie, mais il est bien évident qu'il pourrait être en matière plastique moulée ou autre.

Dans cet exemple, le godet comporte une paroi arrière 1, deux parois latérales 2, 3 et un fond 4 relevé vers l'avant.

La paroi arrière 1 est prolongée par un repli 5 permettant de renforcer les points d'attache 6, afin de consolider fixation du godet par des boulons à ergots ou autres moyens sur l'organe d'entraînement (chaîne, câble, bande ...). Bien entendu, dans certaines constructions, le repli 5 n'est pas absolument nécessaire et peut être supprimé.

Les parois latérales 2, 3 sont perpendiculaires à la paroi arrière 1, mais sont légèrement convergentes vers le fond 4 du godet afin de faciliter le remplissage du godet suivant, de permettre un emboutissage profond et d'autoriser l'empilage des godets à vide.

Le fond 4 est conformé sur toute son étendue, depuis le bord d'attaque avant 7 jusqu'à la paroi arrière 1, sensiblement en parabole dont l'axe de symétrie 8, coïncidant avec la direction asymptotique forme avec cette paroi arrière un angle compris entre 60 et 75° et dont le sommet 9 est situé à proximité de ce bord d'attaque 7, cet angle étant de préférence égal à 68°. Ainsi, la tangente au sommet 10 de ce fond parabolique 4 forme avec la paroi arrière 1, un angle compris entre 15 et 30°, ce qui facilite l'emboutissage profond et permet de ne pas s'opposer à l'éjection du produit véhiculé, tout en conservant au godet une contenance suffisante ; cet angle est de préférence égal à 22°. Cette forme parabolique particulière constituant le fond et le bord d'attaque permet de diminuer au maximum la résistance de la surface métallique à l'écoulement des particules élémentaires du produit, en minimisant les perturbations à l'écoulement.

En outre, le fond 4 est raccordé à la paroi arrière 1 par un arrondi cylindrique 11 dont le rayon, variable avec les dimensions du godet, est choisi pour assurer une continuité d'écoulement. De même, les parois latérales 2, 3 sont raccordées au fond 4 par des arrondis cylindriques 12, 13 et à la paroi arrière 1 par des arrondis cylindriques 14, 15, ces arrondis se croisant par des coins sphériques 16, 17. Tous ces arrondis cylindriques et sphériques sont dimensionnés pour concilier l'emboutissage profond du godet et le vidage facile du produit, tout en conservant une capacité maximale.

Les bords supérieurs 18 et 19 des parois latérales 2 et 3 respectivement sont conformés en lignes brisées dont :

- les parties antérieures 18a et 19a s'élèvent du bord d'attaque 7 vers la paroi arrière 1.

- et les parties postérieures 18p et 19p s'abaissent du point haut des précédentes vers ladite paroi arrière.

La pente de ces parties antérieures 18a et 19a est sensiblement égale à la pente naturelle d'un tas du produit véhiculé. Elle est de préférence égale à environ 22° afin d'accroître la capacité du godet mais elle peut être comprise entre 15 et 30°. La pente descendante des parties postérieures 18p et 19p ne gêne en rien le remplissage. Au contraire, elle permet de canaliser le produit en laissant un passage à peu près constant entre ces parties du godet considéré et l'arrondi du fond du godet situé au-dessus.

Enfin, ces bords supérieurs 7, 18 et 19 du godet sont arrondis sensiblement en quart de cercle. Ces arrondis 20 à 22 évitent le bris des grains lors du piochage du produit granuleux.

2

## Revendications

1.- Godet pour élévateur à godets, comprenant une paroi arrière (1) et deux parois latérales (2, 3) reliées par des arrondis (12 à 15) entre elles et avec un fond (4) relevé vers l'avant qui se termine par un bord d'attaque (7), caractérisé en ce que le fond (4) est conformé, sur toute son étendue depuis le bord d'attaque (7) jusqu'à l'arrondi (11) de raccordement avec la paroi arrière (1), sensiblement en parabole dont la direction asymptotique (8) forme un angle de 60 à 75° avec cette paroi arrière (1) et dont le sommet (9) est situé à proximité de ce bord d'attaque (7) de sorte que la tangente au sommet (10) de ce fond parabolique forme un angle de 15 à 30° avec ladite paroi arrière.

2.- Godet selon la revendication 1, caractérisé en ce que la direction asymptotique (8) précitée forme avec la paroi arrière (1) un angle de préférence sensiblement égal à 22° de sorte que la tangente au sommet (10) précitée forme avec ladite paroi arrière un angle de préférence sensiblement égal à 22°.

3.- Godet selon la revendication 1 ou 2, caractérisé en ce que le bord d'attaque (9) est arrondi sensiblement en quart de cercle (20).

4.- Godet selon l'une quelconque des revendications 1 à 3, caractérisé en ce que le bord supérieur (18, 19) de chaque paroi latérale (2, 3) est une ligne brisée présentant une partie antérieure (18a, 19a) s'élevant du bord d'attaque (7) vers la paroi arrière (1) suivant une pente sensiblement égale à la pente naturelle d'un tas du produit véhiculé et une partie postérieure (18p, 19p) descendant vers ladite paroi arrière (1).

5.- Godet selon la revendication 4, caractérisé en ce que la pente de la partie antérieure (18a, 19a) du bord (18, 19) de chaque paroi latérale (2, 3) est comprise entre 15 et 30° et de préférence égale à environ 22°.

6.- Godet selon l'une quelconque des revendications 1 à 5, caractérisé en ce que le bord supérieur brisé (18, 19) de chaque paroi latérale (2, 3) est arrondi sensiblement en quart de cercle (21, 22).

7.- Godet selon l'une quelconque des revendications 1 à 6, caractérisé en ce que sa paroi postérieure (1), lorsqu'il est métallique, comporte un repli de renfort (5) pour les points d'attache (6) de ce godet sur son organe d'entraînement (chaîne, câble, bande ...).

Fig. 3

Fig. 1

Fig. 2

Fig. 4

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | FR-A-2 050 380 (WUTRA-WERK) * En entier * | 1 | B 65 G 17/36 |
| A | US-A-2 370 531 (GEMENY) * Figure 3 * | 4,5 | |
| A | FR-A- 420 072 (SCHMIDT) * Figures 2,3 * | 7 | |

DOMAINES TECHNIQUES RECHERCHES (Int Cl 4)

B 65 G

Le présent rapport de recherche a été établi pour toutes les revendications

| Lieu de la recherche | Date d'achèvement de la recherche | Examinateur |
|---|---|---|
| LA HAYE | 20-01-1986 | OSTYN T.J.M. |